# EUROPEAN PATENT APPLICATION

(11) **EP 4 738 067 A1**
(43) Date of publication of application: **06.05.2026**
(21) Application number: 25207076.8
(22) Date of filing: 07.10.2025
(51) Int. Cl.: G06F 1/3218, G06F 1/324

(54) **INFORMATION PROCESSING APPARATUS AND CONTROL METHOD**

(30) Priority: 31.10.2024 JP 2024191993
(71) Applicant: Lenovo (Singapore) Pte. Ltd., 556741 (SG)
(72) Inventor: NOMURA, Ryohta, Yokohama-shi, 220-0012 (JP); KAWANO, Seiichi, Yokohama-shi, 220-0012 (JP)
(74) Representative: Openshaw & Co.

(57) **Abstract**

An object of the present invention is to decrease a refresh rate as appropriate to effectively reduce power consumption of a display in a system in which an application does not require an appropriate refresh rate.

An information processing apparatus includes a first processor configured to execute processing based on a program of an OS and a program executed on the OS, a second processor configured to perform image processing on a display image displayed on a display unit based on the processing by the first processor and to output display data in frame order, and a third processor configured to detect a fluctuation amount between frames of the display data, among a plurality of output frames, and to control a refresh rate of the display unit in response to an instruction from the second processor, in which the first processor instructs the second processor on the refresh rate based on an event occurring on the OS and the fluctuation amount detected by the third processor, and the second processor instructs the third processor on the refresh rate instructed from the first processor.

## Description

### BACKGROUND OF THE INVENTION

### Field of the Invention

The present invention relates to an information processing apparatus and a control method.

### Description of the Related Art

Power consumption of a display is closely related to a refresh frequency (refresh rate) of the display, and generally, the lower the refresh rate, the lower the power consumption (for example, see Japanese Unexamined Patent Application Publication No. 2016-122056). For example, logic and analog power of the display are almost proportional to the frequency. In addition, the more frequently graphics processing is rewritten (the higher the frequency), the greater the power.

In some devices such as a smartphone and a smart watch, the refresh rate of the display is decreased to a low value in order to reduce power consumption. This is realized by each application declaring and requesting a necessary refresh rate to an OS. For example, a widget or the like that is always displayed is requested to have a refresh rate lower than a refresh rate of a normal application, while a game or the like that requires a high-speed animation is requested from the application to have a refresh rate higher than the refresh rate of the normal application.

### SUMMARY OF THE INVENTION

However, there is a system in which refresh rate setting for each application is not supported, such as Windows (registered trademark). In such a system, a method different from a method of setting the refresh rate required for each of the applications described above is required in order to lower the refresh rate.

The present invention has been devised in view of the circumstances described above, and an object thereof is to provide an information processing apparatus and a control method that are capable of decreasing a refresh rate as appropriate to effectively reduce power consumption of a display in a system in which an application does not require an appropriate refresh rate.

The present invention is devised in order to solve the problems, and an information processing apparatus according to a first aspect of the present invention includes a memory configured to temporarily store a program of an operating system (OS) and a program executed on the OS, a first processor configured to execute processing based on the programs stored in the memory, a second processor configured to perform image processing on a display image displayed on a display unit based on the processing by the first processor and to output display data after the image processing in frame order, and a third processor configured to detect, based on display data of a plurality of frames output from the second processor, a fluctuation amount between the frames of the display data displayed on the display unit and to control a refresh rate of the display unit in response to an instruction from the second processor, in which the first processor instructs the second processor on the refresh rate of the display unit based on an event occurring on the OS and the fluctuation amount detected by the third processor, and the second processor controls a frame rate of the display data based on the refresh rate instructed from the first processor to output the frame rate and instructs the third processor on the refresh rate instructed from the first processor.

In the information processing apparatus according to the first aspect, the event occurring on the OS may be a user interface (UI) event including a movement of a cursor displayed on the display unit or a movement and a change of a window, and when the event occurs on the OS, the first processor may instruct the third processor on a high refresh rate as compared to when the event does not occur.

In the information processing apparatus according to the first aspect, the first processor may instruct the third processor on a lower refresh rate as the fluctuation amount detected by the third processor is smaller.

In the information processing apparatus according to the first aspect, in a case where a fluctuation occurs between the frames of the display data displayed on the display unit, the first processor may further instruct the third processor on the refresh rate of the display unit based on a position where the fluctuation occurs in a screen of the display unit.

In the information processing apparatus according to the first aspect, the first processor may instruct the third processor on a refresh rate corresponding to video display when a fluctuation that does not change the position continues to occur based on the position where the fluctuation occurs in the screen of the display unit.

In the information processing apparatus according to the first aspect, when the position where the fluctuation occurs in the screen of the display unit is separated from a position of a cursor displayed on the display unit, the first processor may instruct the third processor on a low refresh rate as compared to when the position where the fluctuation occurs in the screen of the display unit is close to the position of the cursor displayed on the display unit.

In the information processing apparatus according to the first aspect, when the position where the fluctuation occurs in the screen of the display unit is a position around the screen of the display unit, the first processor may instruct the third processor on a low refresh rate as compared to when the position where the fluctuation occurs in the screen of the display unit is a central position.

In addition, a control method of an information processing apparatus according to a second aspect of the present invention, including a memory configured to temporarily store a program of an operating system (OS) and a program executed on the OS, a first processor configured to execute processing based on the programs stored in the memory, a second processor, and a third processor, includes a step of performing, by the second processor, image processing on a display image displayed on a display unit based on the processing by the first processor and outputting display data after the image processing in frame order, a step of detecting, by the third processor, based on display data of a plurality of frames output from the second processor, a fluctuation amount between the frames of the display data displayed on the display unit, a step of instructing, by the first processor, the second processor on a refresh rate of the display unit based on an event occurring on the OS and the fluctuation amount detected by the third processor, a step of controlling, by the second processor, a frame rate of the display data based on the refresh rate instructed from the first processor to output the frame rate and instructing the third processor on the refresh rate instructed from the first processor, and a step of controlling, by the third processor, the refresh rate of the display unit in response to the instruction from the second processor.

According to the aspects of the present invention, a refresh rate can be decreased as appropriate to effectively reduce power consumption of the display in a system in which an application does not require an appropriate refresh rate.

### BRIEF DESCRIPTION OF THE DRAWINGS

FIG. 1 is a perspective view illustrating an appearance of an information processing apparatus according to a first embodiment.
FIG. 2 is a block diagram illustrating an example of a hardware configuration of the information processing apparatus according to the first embodiment.
FIG. 3 is a diagram illustrating a setting example of a refresh rate according to the first embodiment.
FIG. 4 is a block diagram illustrating an example of a configuration related to change processing of a refresh rate according to the first embodiment.
FIG. 5 is a block diagram illustrating an example of a configuration of a timing controller according to the first embodiment.
FIG. 6 is a flowchart illustrating a first example of refresh rate change processing according to the first embodiment.
FIG. 7 is a flowchart illustrating a second example of the refresh rate change processing according to the first embodiment.
FIG. 8 is a flowchart illustrating an example of refresh rate change processing according to a second embodiment.
FIG. 9 is a block diagram illustrating an example of a configuration related to change processing of a refresh rate according to a third embodiment.
FIG. 10 is a schematic block diagram illustrating an example of a hardware configuration according to the third embodiment.
FIG. 11 is a block diagram illustrating a first example of a configuration related to change processing of a refresh rate according to a fourth embodiment.
FIG. 12 is a block diagram illustrating a second example of the configuration related to the change processing of a refresh rate according to the fourth embodiment.

### DETAILED DESCRIPTION OF THE INVENTION

Hereinafter, embodiments of the present invention will be described with reference to the drawings.

### <First Embodiment>

First, a first embodiment of the present invention will be described.

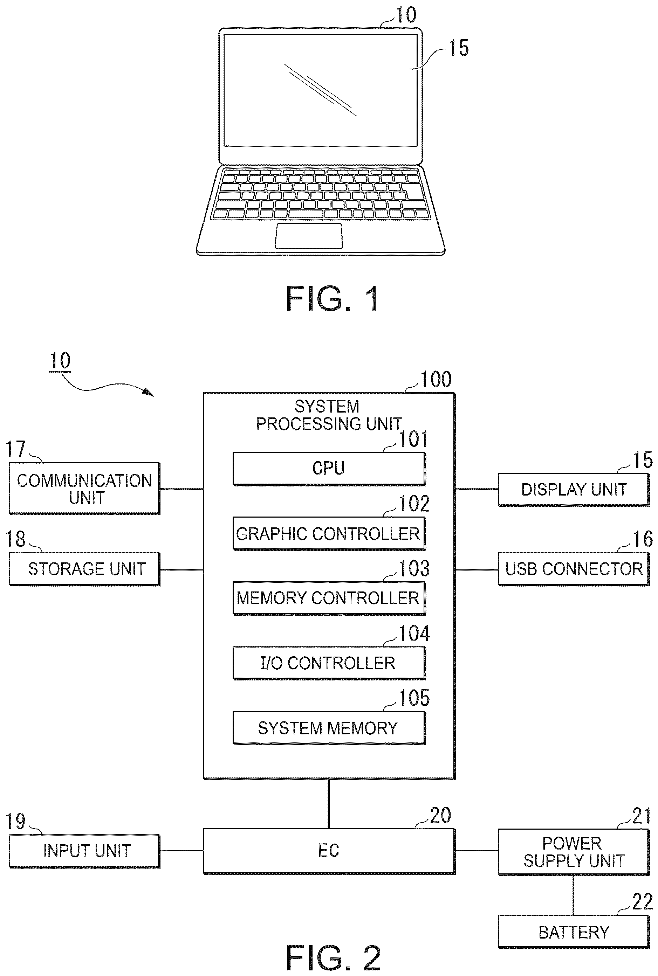

FIG. 1 is a perspective view illustrating an appearance of an information processing apparatus 10 according to the present embodiment. As illustrated in FIG. 1, the information processing apparatus 10 according to the present embodiment is an example of a computer device and is, for example, a clamshell type (notebook type) personal computer (PC). The information processing apparatus 10 includes a display unit 15 that displays a display image based on processing executed by the information processing apparatus 10.

### [Hardware Configuration of Information processing apparatus 10]

FIG. 2 is a schematic block diagram illustrating an example of a hardware configuration of the information processing apparatus 10 according to the present embodiment. The information processing apparatus 10 illustrated in the drawing includes the display unit 15, a USB connector 16, a communication unit 17, a storage unit 18, an input unit 19, an embedded controller (EC) 20, a power supply unit 21, a battery 22, and a system processing unit 100.

The display unit 15 is configured to include a liquid crystal display (LCD), an organic electroluminescence (EL) display, or the like. The display unit 15 displays an image based on display data under control of the system processing unit 100. The display data includes data of an image and text of a still image or a video acquired or generated by processing of an operating system (OS) or processing of an application operating on the OS or the like.

The USB connector 16 is a connection terminal for connecting peripheral devices using a universal serial bus (USB). For example, the USB connector 16 is a terminal on a receptacle side that conforms to the USB Type-C standard. The USB connector 16 can also be connected to an external power supply such as an AC adapter of which connection corresponds to the USB Type-C standard.

The communication unit 17 is connected to another device via a wireless or wired communication network to be able to communicate with the device and transmits and receives various types of data. For example, the communication unit 17 is configured to include a wired LAN interface such as Ethernet (registered trademark) and a wireless LAN interface such as Wi-Fi (registered trademark).

The storage unit 18 is configured to include a storage medium such as a hard disk drive (HDD), a solid state drive (SSD), a random access memory (RAM), and a read only memory (ROM). For example, the storage unit 18 stores an OS, various types of drivers, various types of services/utilities, programs such as applications, various types of data, and the like.

The input unit 19 is an input unit that receives an input from a user and is configured to include a keyboard, for example, as in the information processing apparatus 10 illustrated in FIG. 1. The input unit 19 outputs an operation signal in accordance with the operation of the user to the EC 20 in response to receiving of the operation of the user on the keyboard. The input unit 19 may be configured to include a touch panel, a touch pad, or the like instead of or in addition to the keyboard. In addition, the input unit 19 may be connected to an external operation device such as a mouse and an external keyboard in a wired or wireless manner and may receive an operation of the user on the connected external operation device.

The EC20 is a one-chip microcomputer that monitors and controls various types of devices (peripheral devices, sensors, and the like) regardless of a system state of the OS. The EC 20 is configured to include a central processing unit (CPU), a RAM, a ROM, and the like (not illustrated) and includes a plurality of channels of A/D input terminals, D/A output terminals, a timer, digital input and output terminals, and the like. The input unit 19, the power supply unit 21, the system processing unit 100, and the like are connected to the EC 20 via the input and output terminals. The EC 20 receives or transmits various types of signals from and to each connected unit.

For example, the EC 20 acquires an operation signal output from the input unit 19 and executes processing based on the acquired operation signal. The EC 20 outputs an operation signal related to the processing of the system processing unit 100, among the acquired operation signals, to the system processing unit 100. In addition, the EC 20 controls the power supply unit 21 according to a system state of the OS or the like. For example, the EC 20 outputs a control signal or the like for controlling supply of power according to the system state or the like to the power supply unit 21. In addition, the EC 20 acquires information on a state (remaining capacity and the like) of the battery 22 from the power supply unit 21 by communicating with the power supply unit 21.

The power supply unit 21 is configured to include, for example, a DC/DC converter, a charging and discharging circuit for controlling charging or discharging of the battery 22, and the like. The power supply unit 21 converts direct current power supplied from the battery 22 or direct current power supplied from the external power supply (such as the AC adapter) (not illustrated) into a plurality of voltages required for operating each unit of the information processing apparatus 10. The power supply unit 21 supplies power to each unit of the information processing apparatus 10 under the control of the EC 20.

The battery 22 is a secondary battery for supplying power to each unit of the information processing apparatus 10 when power is not supplied from the external power supply (such as the AC adapter). When power is supplied from the external power supply (such as the AC adapter), the battery 22 is charged with the power via the power supply unit 21 until the battery 22 is fully charged. When power is not supplied from the external power supply (such as the AC adapter), the power charged in the battery 22 is discharged and supplied to each unit of the information processing apparatus 10 via the power supply unit 21.

The system processing unit 100 is configured to include a CPU 101, a graphic controller 102, a memory controller 103, an input-output (I/O) controller 104, and a system memory 105. The CPU 101 and the graphic controller 102 are collectively referred to as a processor in some cases.

The CPU 101 executes processing by programs such as an OS, various types of drivers, various types of services/utilities, and applications. As the OS, Windows (registered trademark) is applied as an example.

The graphic controller 102 is connected to the display unit 15. The graphic controller 102 executes image processing on a display image displayed on the display unit 15 based on processing by the CPU 101 to generate display data. The graphic controller 102 outputs the generated display data to the display unit 15.

The memory controller 103 controls reading and writing of data from the system memory 105, the storage unit 18, and the like according to the processing of the CPU 101 and the graphic controller 102.

The I/O controller 104 controls an input and an output of data to and from the display unit 15, the USB connector 16, the communication unit 17, the EC 20, and the like.

The system memory 105 is a writable memory used as a reading region of a program executed by a processor such as the CPU 101 and the graphic controller 102 or as a work region where processing data of the program is written. For example, the system memory 105 is configured to include a plurality of dynamic random access memory (DRAM) chips. The program includes an OS, various types of drivers for controlling peripheral devices, various types of services/utilities, application programs, and the like.

The CPU 101, the graphic controller 102, the memory controller 103, the input-output (I/O) controller 104, and the system memory 105 may be configured as one integrated processor or some or each may be configured as an individual processor.

### [Configuration of Change Processing of Refresh Rate]

Next, a configuration of optimizing power consumption by appropriately changing a refresh rate of a display in the information processing apparatus 10 according to the present embodiment will be described. The information processing apparatus 10 uses, for example, Windows (registered trademark) as an OS and does not support refresh rate setting for each application. Therefore, each application is not capable of setting a necessary refresh rate.

Thus, the information processing apparatus 10 sets an appropriate refresh rate based on an event occurring on the OS and a fluctuation amount of a screen of the display unit 15 (fluctuation amount of display data). For example, the information processing apparatus 10 sets the refresh rate to be high in a case of display requiring a high response speed (high-speed response), but sets the refresh rate to be low in a case of display in which a low response speed is acceptable, thereby reducing power consumption.

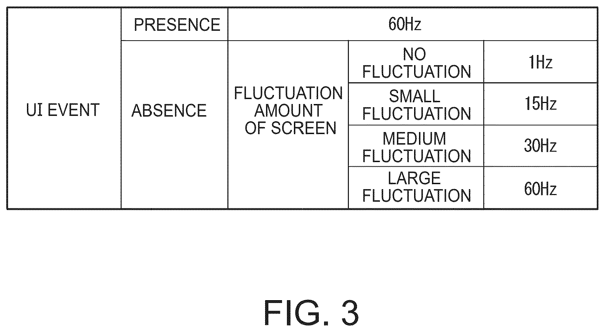

FIG. 3 is a diagram illustrating a setting example of a refresh rate according to the present embodiment. For example, in a case where a user interface (UI) event occurs on the OS, the information processing apparatus 10 sets the refresh rate to be high. The UI event is, for example, a movement of a cursor (for example, a mouse cursor) on the screen, a movement and a change (opening, closing, and the like) of a window of an application, and the like. Since the movement of the cursor or the movement of the window on such a screen requires a high-speed response, the information processing apparatus 10 is set to a high refresh rate (for example, 60 Hz).

On the other hand, in a case where there is no user interface (UI) event occurring on the OS, the information processing apparatus 10 sets a refresh rate based on the fluctuation amount of the screen (the fluctuation amount of display data). For example, the information processing apparatus 10 sets the lowest refresh rate (for example, 1 Hz) in a case where there is no fluctuation.

In addition, in a case of a small fluctuation (for example, less than 10 pixels), such as the number of cursors or timers, the information processing apparatus 10 is set to a relatively low refresh rate (for example, 15 Hz). In addition, in a case of a medium fluctuation (for example, 10 pixels or more and less than 100 pixels), such as a text input, the information processing apparatus 10 is set to a medium refresh rate (for example, 30 Hz). In addition, in a case of a large fluctuation (for example, 100 pixels or more) such as scrolling, the information processing apparatus 10 is set to a high refresh rate (for example, 60 Hz).

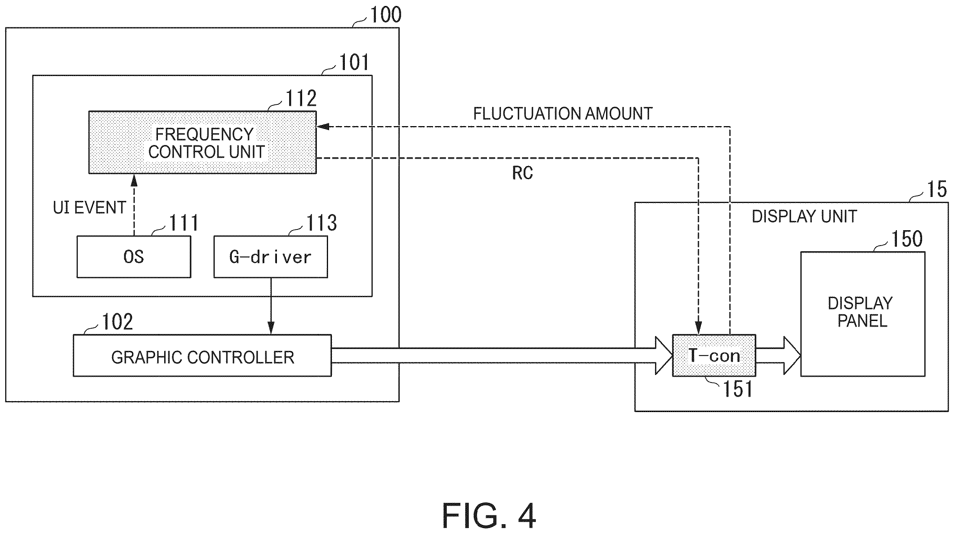

FIG. 4 is a schematic block diagram illustrating an example of a configuration related to change processing of a refresh rate in the information processing apparatus 10 according to the present embodiment. In FIG. 4, the same symbols are assigned to the configurations corresponding to the respective units of FIG. 2.

In FIG. 4, as a configuration of the system processing unit 100, an OS 111, a frequency control unit 112, and a graphic driver 113 (G-driver) are illustrated as a configuration realized by the CPU 101 executing a program. The OS 111 is configured to perform processing of the OS. The frequency control unit 112 has a configuration of performing processing of a specific application operating on the OS and has a function of controlling the refresh rate described with reference to FIG. 3. The graphic driver 113 executes processing of driver software for the CPU 101 to communicate with the graphic controller 102.

The graphic controller 102 performs image processing on a display image displayed on the screen of the display unit 15 based on processing by the CPU 101 and outputs display data after the image processing to the display unit 15 in frame order. For example, the CPU 101 and the graphic controller 102 are connected to each other via the I/O controller 104, but in this drawing, the description of the configuration other than the CPU 101 and the graphic controller 102 in the system processing unit 100 is omitted.

The display unit 15 includes a display panel 150 and a timing controller 151 (T-con). The timing controller 151 performs control for acquiring display data output from the graphic controller 102 in frame order and displaying the display data on the display panel 150. In addition, the timing controller 151 detects a fluctuation amount between frames of the display data based on display data of a plurality of frames output from the graphic controller 102 and transmits the detected fluctuation amount to the frequency control unit 112.

The frequency control unit 112 sets the refresh rate of the display unit 15 based on a UI event from the OS 111 and a fluctuation amount transmitted from the timing controller 151. Then, the frequency control unit 112 transmits a refresh rate control signal (RC) indicating the set refresh rate to the timing controller 151 to instruct the timing controller 151 on the set refresh rate.

When the timing controller 151 acquires the refresh rate control signal (RC) from the frequency control unit 112, the timing controller 151 controls the refresh rate of the display unit 15 in response to an instruction from the frequency control unit 112.

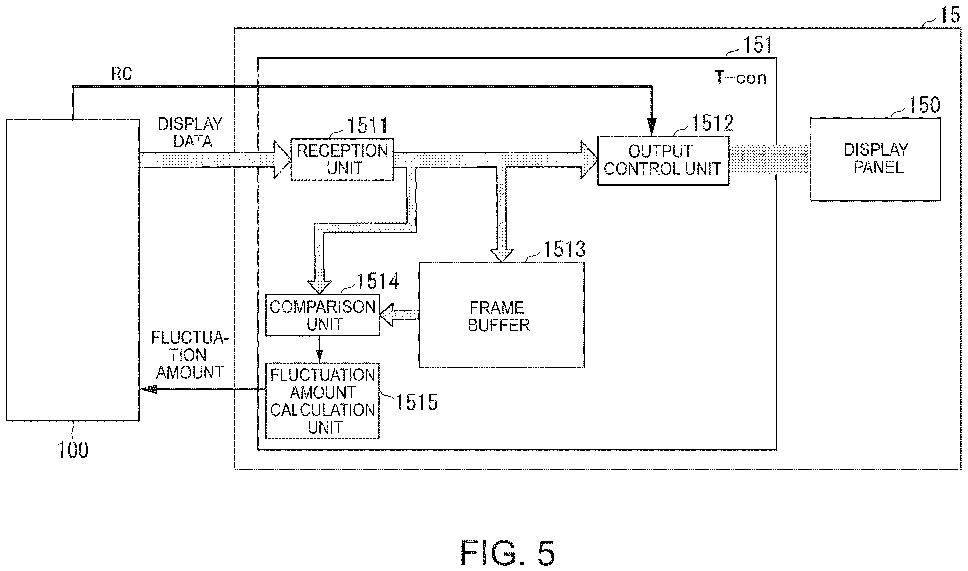

FIG. 5 is a schematic block diagram illustrating an example of a configuration of the timing controller 151 according to the present embodiment. The timing controller 151 includes a reception unit 1511, an output control unit 1512, a frame buffer 1513, a comparison unit 1514, and a fluctuation amount calculation unit 1515. The reception unit 1511 acquires display data output from the system processing unit 100 (graphic controller 102) in frame order and transmits the display data to the output control unit 1512 in the order of acquisition.

The output control unit 1512 performs data conversion and timing control for displaying display data transmitted from the reception unit 1511 in frame order on the display panel 150 and outputs the display data to the display panel 150 so as to be displayed. In addition, when the reception unit 1511 acquires the display data from the system processing unit 100 (graphic controller 102), the reception unit 1511 outputs the acquired display data of one frame to the comparison unit 1514 and stores the acquired display data in the frame buffer 1513.

The comparison unit 1514 compares display data of one frame output from the reception unit 1511 with display data of one frame before one frame stored in the frame buffer 1513 for each pixel, and outputs the comparison result to the fluctuation amount calculation unit 1515.

The fluctuation amount calculation unit 1515 calculates the number of pixels updated between the frames (pixels whose values have fluctuated) based on a comparison result from the comparison unit 1514 and transmits the calculated number of pixels updated between the frames (the number of pixels whose values have fluctuated between the frames) to the system processing unit 100 (frequency control unit 112) as a fluctuation amount of the screen. The fluctuation amount calculation unit 1515 may include a position (a row, a block, or the like) of the updated pixel with respect to a screen region in the fluctuation amount transmitted to the system processing unit 100 (frequency control unit 112).

In addition, after comparison by the comparison unit 1514, display data stored in the frame buffer 1513 is overwritten by display data acquired after the comparison.

Among the respective units included in the timing controller 151, the reception unit 1511, the output control unit 1512, and the frame buffer 1513 are configured to be included in a general timing controller in the related art. On the other hand, the comparison unit 1514 and the fluctuation amount calculation unit 1515 are newly added configurations in the present embodiment as configurations necessary for detecting a fluctuation amount of the screen (a fluctuation amount of display data).

Herein, the change processing of a refresh rate described above may be changed according to a power policy. For example, when the remaining capacity of the battery 22 is small (when less than a predetermined value), the information processing apparatus 10 may perform control such that the refresh rate is 30 Hz or less as a battery saving mode. In addition, when the remaining capacity of the battery 22 is sufficient (when equal to or greater than the predetermined value), the information processing apparatus 10 may apply the change processing of a refresh rate described with reference to FIG. 3 as a balance mode. Similarly, when power is supplied from the AC adapter, the information processing apparatus 10 may apply the change processing of a refresh rate described with reference to FIG. 3 as a high performance mode.

### [Operation of Refresh Rate Change Processing]

Next, an operation of refresh rate change processing according to the present embodiment will be described.

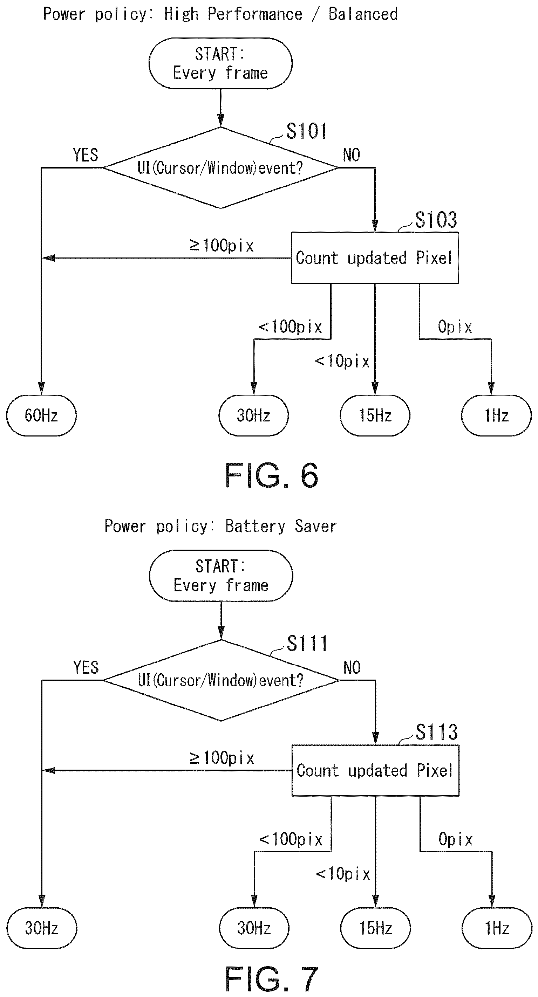

FIG. 6 is a flowchart illustrating a first example of the refresh rate change processing according to the present embodiment. In the example illustrated in FIG. 6, refresh rate change processing when the power policy is the high performance mode (high performance) or the balance mode (balanced) (that is, change processing according to the setting example of a refresh rate illustrated in FIG. 3) is illustrated.

The refresh rate change processing is executed for each frame. The CPU 101 (frequency control unit 112) determines whether or not there is a UI event such as a movement of a cursor (for example, a mouse cursor) and a movement and a change (opening, closing, and the like) of a window of an application (step S101).

In a case where it is determined that there is a UI event (step S101: YES), the CPU 101 (frequency control unit 112) sets a refresh rate to 60 Hz and instructs the display unit 15 (timing controller 151) on the refresh rate. On the other hand, in a case where it is determined that there is no UI event (step S101: NO), the CPU 101 (frequency control unit 112) proceeds to processing of step S103.

The CPU 101 (frequency control unit 112) determines, for example, the fluctuation amount (the number of updated pixels) of the screen acquired from the display unit 15 (timing controller 151) (step S103). In a case where it is determined that the number of updated pixels is 100 pixels or more, the CPU 101 (frequency control unit 112) sets the refresh rate to 60 Hz and instructs the display unit 15 (timing controller 151) on the refresh rate.

In a case where it is determined that the number of updated pixels is less than 100 pixels (10 pixels or more), the CPU 101 (frequency control unit 112) sets the refresh rate to 30 Hz and instructs the display unit 15 (timing controller 151) on the refresh rate.

In a case where it is determined that the number of updated pixels is less than 10 pixels (1 pixel or more), the CPU 101 (frequency control unit 112) sets the refresh rate to 15 Hz and instructs the display unit 15 (timing controller 151) on the refresh rate.

In a case where it is determined that the number of updated pixels is 0 pixels, the CPU 101 (frequency control unit 112) sets the refresh rate to 1 Hz and instructs the display unit 15 (timing controller 151) on the refresh rate.

In the high performance mode in which power is supplied from the AC adapter, the information processing apparatus 10 may not perform control of decreasing the refresh rate and may always set the refresh rate to a high refresh rate (for example, 60 Hz).

FIG. 7 is a flowchart illustrating a second example of the refresh rate change processing according to the present embodiment. In the example illustrated in FIG. 7, the refresh rate change processing when the power policy is the battery saving mode (battery saver) is illustrated. As described above, in the battery saving mode, the refresh rate is controlled to be 30 Hz or less.

The refresh rate change processing is executed for each frame. The CPU 101 (frequency control unit 112) determines whether or not there is a UI event such as a movement of a cursor (for example, a mouse cursor) and a movement and a change (opening, closing, and the like) of a window of an application (step S101).

In a case where it is determined that there is a UI event (step S101: YES), the CPU 101 (frequency control unit 112) sets a refresh rate to 30 Hz and instructs the display unit 15 (timing controller 151) on the refresh rate. On the other hand, in a case where it is determined that there is no UI event (step S101: NO), the CPU 101 (frequency control unit 112) proceeds to processing of step S103.

The CPU 101 (frequency control unit 112) determines, for example, the fluctuation amount (the number of updated pixels) of the screen acquired from the display unit 15 (timing controller 151) (step S103). In a case where it is determined that the number of updated pixels is 100 pixels or more, the CPU 101 (frequency control unit 112) sets the refresh rate to 30 Hz and instructs the display unit 15 (timing controller 151) on the refresh rate.

In a case where it is determined that the number of updated pixels is less than 100 pixels (10 pixels or more), the CPU 101 (frequency control unit 112) sets the refresh rate to 30 Hz and instructs the display unit 15 (timing controller 151) on the refresh rate.

In a case where it is determined that the number of updated pixels is less than 10 pixels (1 pixel or more), the CPU 101 (frequency control unit 112) sets the refresh rate to 15 Hz and instructs the display unit 15 (timing controller 151) on the refresh rate.

In a case where it is determined that the number of updated pixels is 0 pixels, the CPU 101 (frequency control unit 112) sets the refresh rate to 1 Hz and instructs the display unit 15 (timing controller 151) on the refresh rate.

As described above, the information processing apparatus 10 according to the present embodiment includes the system memory 105 (an example of a memory) that temporarily stores a program of an OS and a program executed on the OS, the CPU 101 (an example of a first processor) that executes processing based on a program stored in the system memory 105, the graphic controller 102 (an example of a second processor), and the timing controller 151 (an example of a third processor). The graphic controller 102 performs image processing on a display image displayed on the display unit 15 based on processing by the CPU 101 and outputs display data after the image processing in frame order. The timing controller 151 detects a fluctuation amount (a fluctuation amount of the screen) between frames of the display data displayed on the display unit 15 based on display data of a plurality of frames output from the graphic controller 102 and controls a refresh rate of the display unit 15 in response to an instruction from the CPU 101. Then, the CPU 101 instructs the timing controller 151 on the refresh rate of the display unit 15 based on an event occurring on the OS and a fluctuation amount detected by the timing controller 151.

Accordingly, the information processing apparatus 10 is capable of decreasing a refresh rate as appropriate and reducing power consumption of the display based on an event of the OS and a fluctuation amount of the screen even in a system in which an application does not require an appropriate refresh rate.

For example, an event occurring on the OS is a UI event including movement of a cursor displayed on the display unit 15 or a movement and a change of a window. When an event occurs on the OS, the CPU 101 instructs the timing controller 151 on a high refresh rate as compared to when an event does not occur. This is based on the finding that, in an OS operated by a cursor such as Windows (registered trademark), responsiveness of the cursor is important, and when the refresh rate is decreased, deterioration of the responsiveness of the cursor is more easily recognized.

Accordingly, the information processing apparatus 10 is capable of setting the refresh rate to be high in a case of display requiring a high response speed (high-speed response) and setting the refresh rate to be low in a case of display in which a low response speed is acceptable, thereby reducing power consumption.

The CPU 101 instructs the timing controller 151 on a lower refresh rate as a fluctuation amount detected by the timing controller 151 is smaller. This is based on the finding that, in a case where the screen fluctuation amount is small, the fluctuation is difficult to be recognized even when the refresh rate is decreased.

Accordingly, the information processing apparatus 10 is capable of controlling the refresh rate as appropriate according to a fluctuation amount of the screen, and in a case where the fluctuation amount of the screen is small, the low response speed is acceptable. Therefore, the refresh rate can be set to be low to reduce power consumption.

In addition, a control method of the information processing apparatus 10 according to the present embodiment includes a step of performing, by the graphic controller 102 (an example of the second processor), image processing on a display image displayed on the display unit 15 based on processing by the CPU 101 (an example of the first processor) and outputting display data after the image processing in frame order, a step of detecting, by the timing controller 151 (an example of the third processor), based on the display data of a plurality of frames output from the graphic controller 102, a fluctuation amount between the frames of the display data displayed on the display unit 15, a step of instructing, by the CPU 101, the timing controller 151 on a refresh rate of the display unit 15 based on an event occurring on the OS and the fluctuation amount detected by the timing controller 151, and a step of controlling, by the timing controller 151, the refresh rate of the display unit 15 in response to the instruction from the CPU 101.

Accordingly, the control method of the information processing apparatus 10 is capable of decreasing the refresh rate as appropriate and reducing power consumption of the display based on an event of the OS and a fluctuation amount of the screen even in a system in which an application does not require an appropriate refresh rate.

As the related art, there is also a technology of decreasing the refresh rate as low as possible in a case where there is no screen change at all and returning the refresh rate to normal in a case where the screen is changed even slightly. However, in a method of controlling the refresh rate only by the screen change, in a case where the screen is changed even slightly, for example, even in a case where the refresh rate is actually low and sufficient, such as a case where clock display at a screen end is changed, the refresh rate that has been decreased is returned to normal in some cases, and a power reducing effect is small. In addition, since the screen change cannot be detected until the screen change actually occurs, for example, in a case where graphics processing is also set to a low refresh rate, even when an event requiring high refresh occurs, the screen change cannot be detected until the next frame, and response to raising the refresh rate is delayed. For this reason, lowering the refresh rate in this method requires a restriction such as being limited to a case where there is no screen fluctuation for a long time, and as a result, the power reducing effect is small. On the other hand, in the present embodiment, power consumption of the display can be effectively reduced by reducing the refresh rate as appropriate based on both an event of the OS and a change (fluctuation amount) of the screen, in addition to the change of the screen. In addition, in the present embodiment, by controlling the refresh rate based on both the event of the OS and the change (fluctuation amount) of the screen, response in a case where a rise in the refresh rate is required can be improved.

### <Second Embodiment>

Next, a second embodiment of the present invention will be described.

An example in which the refresh rate is controlled based on a UI event on the OS and a fluctuation amount of the screen has been described in the first embodiment, but the refresh rate may also be controlled based on a position where a fluctuation occurs in the screen. For example, the CPU 101 (frequency control unit 112) may estimate that a video is displayed when the fluctuation that does not change the position in the screen of the display unit 15 continues to occur and may set the refresh rate to a refresh rate (for example, 30 Hz) corresponding to video display (video reproduction).

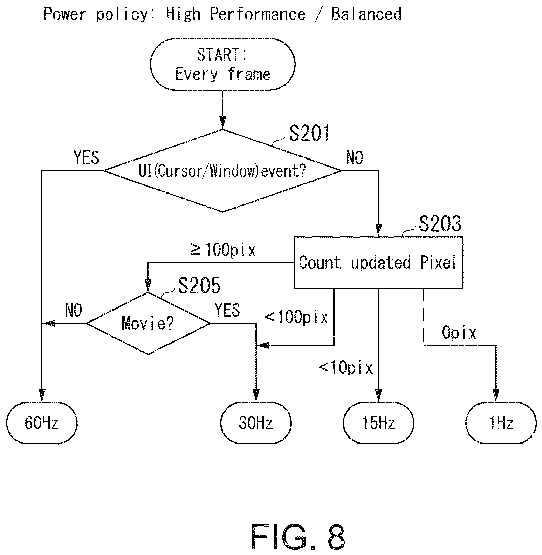

FIG. 8 is a flowchart illustrating an example of the refresh rate change processing according to the present embodiment. The example illustrated in FIG. 8 is refresh rate change processing when the power policy is the high performance mode or the balance mode (balanced) and is different from the example illustrated in FIG. 6 in that video determination is added in a case where the number of updated pixels is 100 pixels or more.

The refresh rate change processing is executed for each frame. The CPU 101 (frequency control unit 112) determines whether or not there is a UI event such as a movement of a cursor (for example, a mouse cursor) and a movement and a change (opening, closing, and the like) of a window of an application (step S201).

In a case where it is determined that there is a UI event (step S201: YES), the CPU 101 (frequency control unit 112) sets a refresh rate to 60 Hz and instructs the display unit 15 (timing controller 151) on the refresh rate. On the other hand, in a case where it is determined that there is no UI event (step S201: NO), the CPU 101 (frequency control unit 112) proceeds to processing of step S203.

The CPU 101 (frequency control unit 112) determines, for example, the fluctuation amount (the number of updated pixels) of the screen acquired from the display unit 15 (timing controller 151) (step S203). In a case where it is determined that the number of updated pixels is 100 pixels or more, the CPU 101 (frequency control unit 112) proceeds to processing of step S205.

The CPU 101 (frequency control unit 112) determines whether or not the video is displayed depending on whether or not a fluctuation that does not change the position in the screen of the display unit 15 continues to occur (step S205). For example, in a case where update of the pixels continues to occur in consecutive frames without changing the position at a predetermined position (range) in the screen, the CPU 101 (frequency control unit 112) determines that the video is being displayed.

In a case where it is determined that a video is displayed (step S205: YES), the CPU 101 (frequency control unit 112) sets a refresh rate to 30 Hz and instructs the display unit 15 (timing controller 151) on the refresh rate. On the other hand, in a case where it is determined that the video is not being displayed (step S205: NO), the CPU 101 (frequency control unit 112) sets the refresh rate to 60 Hz and instructs the display unit 15 (timing controller 151) on the refresh rate.

In addition, in step S203, in a case where it is determined that the number of updated pixels is less than 100 pixels (10 pixels or more), the CPU 101 (frequency control unit 112) sets the refresh rate to 30 Hz and instructs the display unit 15 (timing controller 151) on the refresh rate.

In addition, in step S203, in a case where it is determined that the number of updated pixels is less than 10 pixels (1 pixel or more), the CPU 101 (frequency control unit 112) sets the refresh rate to 15 Hz and instructs the display unit 15 (timing controller 151) on the refresh rate.

In addition, in step S203, in a case where it is determined that the number of updated pixels is 0 pixels, the CPU 101 (frequency control unit 112) sets the refresh rate to 1 Hz and instructs the display unit 15 (timing controller 151) on the refresh rate.

In the high performance mode in which power is supplied from the AC adapter, the information processing apparatus 10 may not perform control of decreasing the refresh rate and may always set the refresh rate to a high refresh rate (for example, 60 Hz).

As described above, in the information processing apparatus 10 according to the present embodiment, in a case where a fluctuation occurs between frames of display data displayed on the display unit 15, the CPU 101 further instructs the timing controller 151 on a refresh rate of the display unit 15 based on a position where the fluctuation occurs in the screen of the display unit 15.

Accordingly, the information processing apparatus 10 is capable of controlling a refresh rate as appropriate based on a position where a fluctuation occurs in the screen.

For example, the CPU 101 instructs the timing controller 151 on a refresh rate (for example, 30 Hz) corresponding to video display (video reproduction) based on a position where a fluctuation occurs in the screen of the display unit 15 when a fluctuation that does not change the position continues to occur.

Accordingly, in a case where it can be determined that a video is being displayed, the information processing apparatus 10 is capable of reducing power consumption since the refresh rate can be reduced to a refresh rate suitable for video display (for example, reduced from 60 Hz to 30 Hz) even when a fluctuation amount of the screen is large.

When a position where a fluctuation occurs in the screen of the display unit 15 is separated from a position of a cursor displayed on the display unit 15, the CPU 101 may instruct the timing controller 151 on a low refresh rate as compared to a case where the position is close. This is based on the finding that, in a case where a small area of fluctuation occurs at a position separated from a point of interest, the fluctuation is difficult to be recognized even when the refresh rate is low.

Accordingly, in a case where content that is not gazed at by the user fluctuates, the information processing apparatus 10 is capable of reducing power consumption by setting the refresh rate to a lower refresh rate (for example, from 30 Hz to 15 Hz).

In addition, when a position where a fluctuation occurs in the screen of the display unit 15 is a position around the screen of the display unit 15, the CPU 101 may instruct the timing controller 151 on a low refresh rate as compared to a case where the position is a central position.

Accordingly, in a case where content that is not gazed at by the user fluctuates, the information processing apparatus 10 is capable of reducing power consumption by setting the refresh rate to a lower refresh rate (for example, from 30 Hz to 15 Hz).

### <Third Embodiment>

Next, a third embodiment of the present invention will be described.

Detection of a fluctuation amount of the screen (a fluctuation amount of display data) is performed in the timing controller 151 in the first embodiment, but detection of the fluctuation amount of the screen (the fluctuation amount of the display data) may be performed using external hardware.

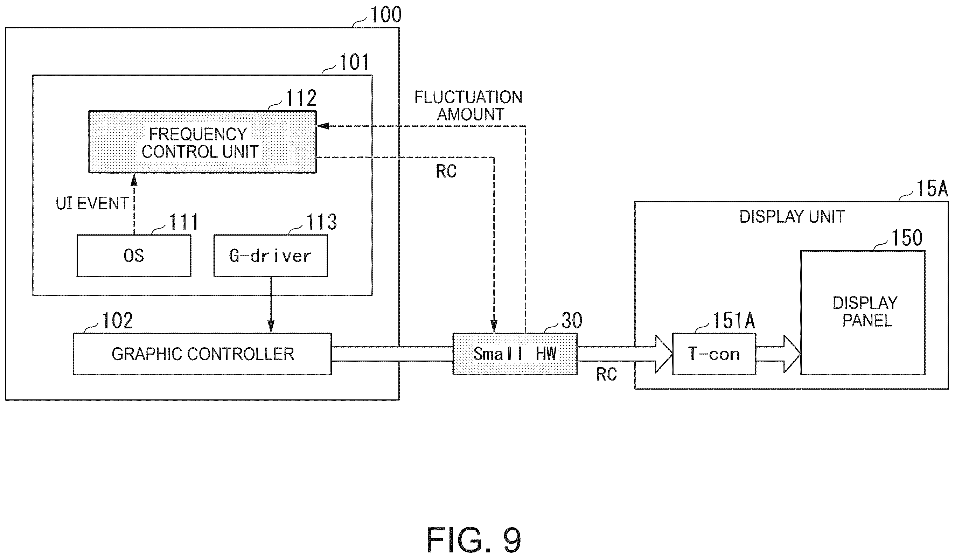

FIG. 9 is a schematic block diagram illustrating an example of a configuration related to change processing of a refresh rate according to the present embodiment. In FIG. 9, the same symbols are assigned to the configurations corresponding to the respective units of FIG. 4, and description thereof will be omitted. A display unit 15A is different from the display unit 15 of FIG. 4 in that a timing controller 151A does not include the comparison unit 1514 and the fluctuation amount calculation unit 1515 as compared to the timing controller 151 of FIG. 4.

In FIG. 9, the configuration corresponding to the comparison unit 1514 and the fluctuation amount calculation unit 1515 in FIG. 4 is included in a small external hardware 30 (Small HW) having a function of detecting a fluctuation amount of the screen (a fluctuation amount of display data). The frequency control unit 112 acquires the fluctuation amount of the display data between frames from the hardware 30. In addition, the frequency control unit 112 transmits the refresh rate control signal (RC) to the hardware 30.

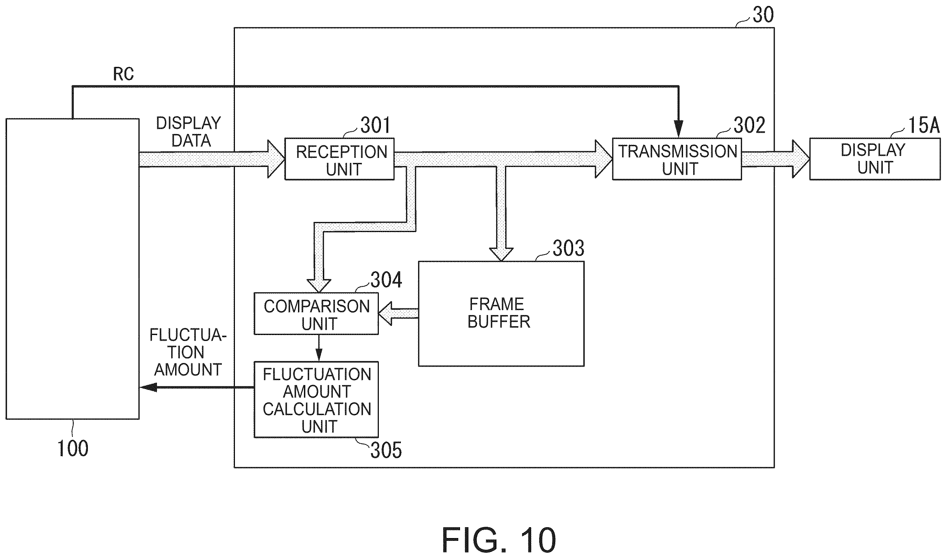

FIG. 10 is a schematic block diagram illustrating an example of a configuration of the hardware 30 according to the present embodiment. The hardware 30 includes a reception unit 301, a transmission unit 302, a frame buffer 303, a comparison unit 304, and a fluctuation amount calculation unit 305.

The reception unit 301 acquires display data output from the system processing unit 100 (graphic controller 102) in frame order and outputs the display data to the transmission unit 302 in the order of acquisition. The transmission unit 302 transmits the display data to the display unit 15A in a pass-through manner in the order of acquisition. In addition, the transmission unit 302 acquires the refresh rate control signal (RC) from the frequency control unit 112 and transmits the acquired refresh rate control signal (RC) to the display unit 15A (timing controller 151A) in the pass-through manner.

In addition, when the reception unit 301 acquires display data from the system processing unit 100 (graphic controller 102), the reception unit 301 outputs the acquired display data of one frame to the comparison unit 304 and stores the acquired display data in the frame buffer 303.

The frame buffer 303, the comparison unit 304, and the fluctuation amount calculation unit 305 have configurations corresponding to the frame buffer 1513, the comparison unit 1514, and the fluctuation amount calculation unit 1515 in FIG. 4, respectively. The fluctuation amount calculation unit 305 calculates the number of pixels (pixels whose values have fluctuated) updated between frames based on a comparison result from the comparison unit 304 and transmits the calculated number of pixels updated between the frames to the system processing unit 100 (frequency control unit 112) as a fluctuation amount of the screen. The fluctuation amount calculation unit 305 may include a position (a row, a block, or the like) of the updated pixel with respect to a screen region in the fluctuation amount transmitted to the system processing unit 100 (frequency control unit 112).

As described above, the third processor of the present invention may be configured as the hardware 30 and the timing controller 151A, the hardware 30 may detect, based on display data of a plurality of frames output from the graphic controller 102, a fluctuation amount (a fluctuation amount of the screen) between the frames of the display data displayed on the display unit 15, and the timing controller 151A may be configured to control a refresh rate of the display unit 15 in response to an instruction from the CPU 101.

Even with such a configuration, the refresh rate control processing described in the first embodiment and the second embodiment can be applied, and the same effects as effects of the first embodiment and the second embodiment are achieved.

In the first embodiment, since a fluctuation amount of the screen can be detected by using the frame buffer in the timing controller 151 without requiring the external hardware 30, there is an advantage that a circuit scale can be reduced. On the other hand, in the present embodiment, since the timing controller 151A has a general configuration of the related art, there is an advantage that it is not necessary to add a new configuration to the timing controller 151A.

### <Fourth Embodiment>

Next, a fourth embodiment of the present invention will be described.

A configuration has been described in which power consumption is optimized by controlling a refresh rate of the display unit 15 (15A) in the first embodiment to the third embodiment, but in addition to the control of the refresh rate, a frequency (frame rate) of display data output from the graphic controller 102 may also be changed. When the refresh rate is set to be low, the power consumption can be further reduced by also setting the frame rate to be low.

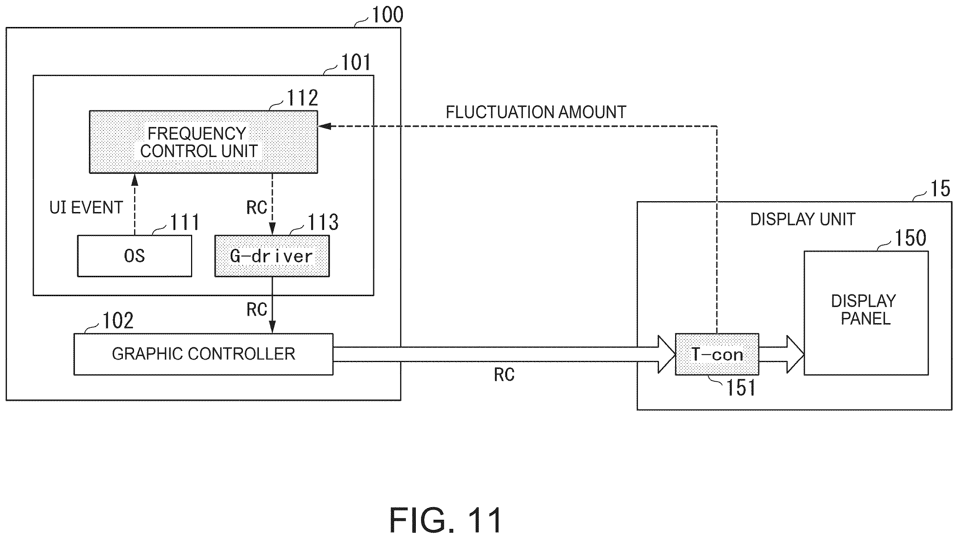

FIG. 11 is a schematic block diagram illustrating a first example of a configuration related to change processing of a refresh rate according to the present embodiment. In FIG. 11, the same symbols are assigned to the configurations corresponding to the respective units of FIG. 4, and description thereof will be omitted.

In a configuration example illustrated in FIG. 11, the timing controller 151 detects a fluctuation amount of the screen (a fluctuation amount of display data) as in the configuration illustrated in FIG. 4, but a difference from the configuration illustrated in FIG. 4 is that the frequency control unit 112 transmits the refresh rate control signal (RC) to the graphic controller 102 instead of transmitting to the timing controller 151.

The graphic controller 102 controls a frame rate of display data based on a frequency of the refresh rate control signal (RC) acquired from the frequency control unit 112. In addition, the graphic controller 102 transmits the refresh rate control signal (RC) acquired from the frequency control unit 112 to the timing controller 151. Accordingly, the timing controller 151 controls the refresh rate based on the refresh rate control signal (RC) acquired from the graphic controller 102.

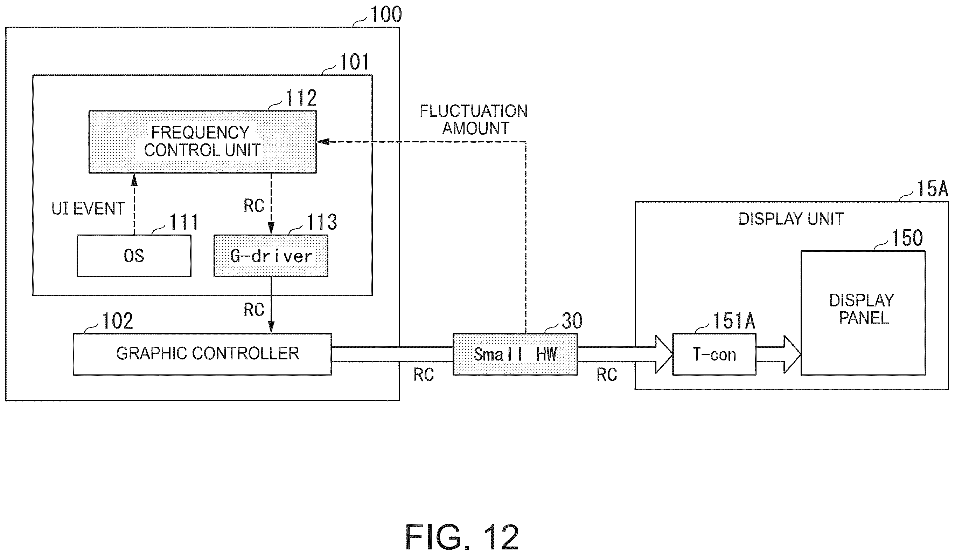

FIG. 12 is a schematic block diagram illustrating a second example of a configuration related to change processing of a refresh rate according to the present embodiment. In FIG. 12, the same symbols are assigned to the configurations corresponding to the respective units of FIG. 9, and description thereof will be omitted.

In a configuration example illustrated in FIG. 12, the hardware 30 detects a fluctuation amount of the screen (a fluctuation amount of display data) as in the configuration illustrated in FIG. 9, but a difference from the configuration illustrated in FIG. 9 is that the frequency control unit 112 transmits the refresh rate control signal (RC) to the graphic controller 102 instead of transmitting to the hardware 30.

The graphic controller 102 controls a frame rate of display data based on a frequency of the refresh rate control signal (RC) acquired from the frequency control unit 112. In addition, the graphic controller 102 transmits the refresh rate control signal (RC) acquired from the frequency control unit 112 to the timing controller 151A via the hardware 30. Accordingly, the timing controller 151A controls a refresh rate based on the refresh rate control signal (RC) acquired from the hardware 30.

As described above, the information processing apparatus 10 according to the present embodiment includes the system memory 105 (an example of the memory) that temporarily stores a program of an OS and a program executed on the OS, the CPU 101 (an example of the first processor) that executes processing based on a program stored in the system memory 105, the graphic controller 102 (an example of the second processor), the timing controller 151 or the timing controller 151A, and the hardware 30 (an example of the third processor). The graphic controller 102 performs image processing on a display image displayed on the display unit 15 (15A) based on processing by the CPU 101 and outputs display data after the image processing in frame order. The timing controller 151 or the hardware 30 detects a fluctuation amount (a fluctuation amount of the screen) between frames of the display data displayed on the display unit 15 (15A) based on display data of a plurality of frames output from the graphic controller 102. The timing controller 151 (151A) controls a refresh rate of the display unit 15 (15A) in response to an instruction from the CPU 101. Then, the CPU 101 instructs the graphic controller 102 on the refresh rate of the display unit 15 (15A) based on an event occurring on the OS and a fluctuation amount detected by the timing controller 151. In addition, the graphic controller 102 controls a frame rate of the display data based on the refresh rate instructed from the CPU 101 to output the display data and instructs the timing controller 151 (151A) on the refresh rate instructed from the CPU 101.

Accordingly, the information processing apparatus 10 is capable of decreasing a refresh rate as appropriate and reducing power consumption of the display based on an event of the OS and a fluctuation amount of the screen even in a system in which an application does not require an appropriate refresh rate.

In addition, the control method of the information processing apparatus 10 according to the present embodiment includes a step of performing, by the graphic controller 102 (an example of the second processor), image processing on a display image displayed on the display unit 15 (15A) based on processing by the CPU 101 (an example of the first processor) and outputting display data after the image processing in frame order, a step of detecting, by the timing controller 151 or the hardware 30 (an example of the third processor), based on the display data of a plurality of frames output from the graphic controller 102, a fluctuation amount between frames of the display data displayed on the display unit 15 (15A), a step of instructing, by the CPU 101, the graphic controller 102 on a refresh rate of the display unit 15 (15A) based on an event occurring on the OS and the fluctuation amount detected by the timing controller 151 or the hardware 30, a step of controlling, by the graphic controller 102, a frame rate of the display data based on the refresh rate instructed from the CPU 101 to output the frame rate and instructing the timing controller 151 (151A) on the refresh rate instructed from the CPU 101, and a step of controlling, by the timing controller 151 (151A), the refresh rate of the display unit 15 (15A) in response to the instruction from the graphic controller 102.

Accordingly, the control method of the information processing apparatus 10 is capable of decreasing the refresh rate as appropriate and reducing power consumption of the display based on an event of the OS and a fluctuation amount of the screen even in a system in which an application does not require an appropriate refresh rate.

Although the embodiments of the invention have been described in detail with reference to the drawings, the specific configuration is not limited to the configuration described above, and various design changes and the like can be made without departing from the scope of the invention.

In the embodiments, since a refresh rate is determined by detecting a difference (a fluctuation amount of the screen) in the value of the pixel between frames of display data of a displayed frame and display data of the past frame with reference to the state of the screen, an appropriate refresh rate is determined after at least one or more frames. Therefore, control may be performed in which in a case where the refresh rate is raised, the refresh rate is immediately raised when the fluctuation amount of the screen is detected, and in a case where the refresh rate is lowered, a timer of approximately several hundreds of milliseconds (ms) to several seconds (s) is provided, and the refresh rate may be lowered after confirming that a state where the refresh rate is lowered is continued. By performing this control, for example, when a large fluctuation occurs in the screen from a state where the screen is 1 Hz, the refresh rate can be immediately raised to display a response according to the fluctuation of the screen, and when the refresh rate is lowered, the refresh rate can be lowered after confirming that the refresh rate may be reliably lowered, not in a temporary screen state. Thus the refresh rate can be controlled as appropriate.

In addition, in the embodiments, in a case where a refresh rate is raised, the refresh rate can be raised immediately (after 1 frame) when a fluctuation amount of the screen is detected. Therefore, the refresh rate can be controlled as appropriate as compared to a case where the refresh rate can be changed only at a limited update timing (after a maximum of 1 second (s)) when the refresh rate is changed in the related art. In addition, since the refresh rate can be raised immediately (after one frame), control of lowering the refresh rate can also be actively performed.

In addition, in the embodiments, since the refresh rate can be gradually changed to a plurality of refresh rates depending on an event on the OS, a fluctuation amount or a position of the screen, and the like, the refresh rate can be more appropriately controlled as compared to control of simply switching between two types of refresh rates depending on whether or not there is a fluctuation in the screen in the related art.

In addition, the information processing apparatus 10 described above includes a computer system therein. A program for realizing the functions of each configuration included in each unit of the information processing apparatus 10 described above may be recorded on a computer-readable recording medium, and the program recorded on the recording medium may be loaded into the computer system and executed to perform the processing in each configuration included in each unit of the information processing apparatus 10 described above. Herein, the expression "the program recorded on the recording medium may be loaded into the computer system and executed" includes installing a program in the computer system. Herein, the term "computer system" includes hardware such as an OS and peripheral devices. In addition, the term "computer system" may include a plurality of computer devices connected via a network including a communication line such as the Internet, a WAN, a LAN, and a dedicated line. In addition, the term "computer-readable recording medium" refers to a storage device such as a portable medium, such as a flexible disk, a magneto-optical disk, a ROM, and a CD-ROM, or a hard disk built in the computer system. As described above, the recording medium in which the program is stored may be a non-transitory recording medium such as a CD-ROM.

In addition, the recording medium also includes a recording medium provided inside or outside accessible from a distribution server in order to distribute the program. A configuration where the program is divided into a plurality of parts, and then the divided programs are downloaded at different timings and combined in each configuration included in the information processing apparatus 10, or a distribution server that distributes each of the divided programs may be different. Further, the term "computer-readable recording medium" also includes a computer-readable recording medium that holds a program for a certain period of time, such as a volatile memory (RAM) inside a computer system that is a server or a client in a case where the program is transmitted via a network. In addition, the program may be for realizing a part of the functions described above. Further, the functions described above may be realized by a combination of the functions and a program already recorded in the computer system, that is, a differential file (differential program).

In addition, a part or all of the respective functions provided in the information processing apparatus 10 in the embodiments described above may be realized as an integrated circuit such as a large scale integration (LSI). Each of the functions may be individually processed, or a part or all of the functions may be integrated and processed. In addition, a method of integrating circuits is not limited to the LSI and may be realized by a dedicated circuit or a general-purpose processor. In addition, in a case where a technology of integrating circuits has appeared as a substitute for the LSI due to advancement of semiconductor technology, an integrated circuit using the technology may be used.

In addition, an example in which the information processing apparatus 10 is a clamshell type (notebook type) PC has been described in the embodiments described above, but a desktop type or tablet type PC may be used. Description of Symbols
- 1: information processing system
- 5: USB cable
- 10: information processing apparatus
- 15, 15A: display unit
- 16: USB connector
- 17: communication unit
- 18: storage unit
- 19: input unit
- 20: EC
- 21: power supply unit
- 22: battery
- 30: hardware
- 100: system processing unit
- 101: CPU
- 102: graphic controller
- 103: memory controller
- 104: I/O controller
- 105: system memory
- 150: display panel
- 151, 151A: timing controller
- 301: reception unit
- 302: transmission unit
- 303: frame buffer
- 304: comparison unit
- 305: fluctuation amount calculation unit
- 1511: reception unit
- 1512: output control unit
- 1513: frame buffer
- 1514: comparison unit
- 1515: fluctuation amount calculation unit

## Claims

1. An information processing apparatus comprising:
a memory configured to temporarily store a program of an operating system, OS, and a program executed on the OS;
a first processor configured to execute processing based on the programs stored in the memory;
a second processor configured to perform image processing on a display image displayed on a display unit based on the processing by the first processor and to output display data after the image processing in frame order; and
a third processor configured to detect, based on display data of a plurality of frames output from the second processor, a fluctuation amount between the frames of the display data displayed on the display unit and to control a refresh rate of the display unit in response to an instruction from the second processor,
wherein the first processor is configured to instruct the second processor on the refresh rate of the display unit based on an event occurring on the OS and the fluctuation amount detected by the third processor, and
the second processor is configured to control a frame rate of the display data based on the refresh rate instructed from the first processor to output the frame rate and to instruct the third processor on the refresh rate instructed from the first processor.

2. The information processing apparatus according to claim 1,
wherein the event occurring on the OS is a user interface, UI, event including a movement of a cursor displayed on the display unit or a movement and a change of a window, and
the first processor is configured to instruct the third processor on a high refresh rate as compared to when the event does not occur in response to the event occurring on the OS.

3. The information processing apparatus according to claim 1 or claim 2,
wherein the first processor is configured to instruct the third processor on a lower refresh rate as the fluctuation amount detected by the third processor is smaller.

4. The information processing apparatus according to any preceding claim,
wherein in a case where a fluctuation occurs between the frames of the display data displayed on the display unit, the first processor is configured to further instruct the third processor on the refresh rate of the display unit based on a position where the fluctuation occurs in a screen of the display unit.

5. The information processing apparatus according to claim 4,
wherein the first processor is configured to instruct the third processor on a refresh rate corresponding to video display when a fluctuation that does not change the position continues to occur based on the position where the fluctuation occurs in the screen of the display unit.

6. The information processing apparatus according to claim 4 or claim 5,
wherein when the position where the fluctuation occurs in the screen of the display unit is separated from a position of a cursor displayed on the display unit, the first processor is configured to instruct the third processor on a low refresh rate as compared to when the position where the fluctuation occurs in the screen of the display unit is close to the position of the cursor displayed on the display unit.

7. The information processing apparatus according to any one of claims 4 to 6,
wherein when the position where the fluctuation occurs in the screen of the display unit is a position around the screen of the display unit, the first processor is configured to instruct the third processor on a low refresh rate as compared to when the position where the fluctuation occurs in the screen of the display unit is a central position.

8. A control method of an information processing apparatus including a memory configured to temporarily store a program of an operating system, OS, and a program executed on the OS, a first processor configured to execute processing based on the programs stored in the memory, a second processor, and a third processor, the control method comprising:
performing, by the second processor, image processing on a display image displayed on a display unit based on the processing by the first processor and outputting display data after the image processing in frame order;
detecting, by the third processor, based on display data of a plurality of frames output from the second processor, a fluctuation amount between the frames of the display data displayed on the display unit;
instructing, by the first processor, the second processor on a refresh rate of the display unit based on an event occurring on the OS and the fluctuation amount detected by the third processor;
controlling, by the second processor, a frame rate of the display data based on the refresh rate instructed from the first processor to output the frame rate and instructing the third processor on the refresh rate instructed from the first processor; and
controlling, by the third processor, the refresh rate of the display unit in response to the instruction from the second processor.

9. The control method according to claim 8,
wherein the event occurring on the OS is a user interface, UI, event including a movement of a cursor displayed on the display unit or a movement and a change of a window, and the method comprises
instructing, by the first processor, the third processor on a high refresh rate as compared to when the event does not occur in response to the event occurring on the OS.

10. The control method according to claim 8 or claim 9, comprising
instructing, by the first processor, the third processor on a lower refresh rate as the fluctuation amount detected by the third processor is smaller.

11. The control method according to any one of claims 8 to 10,
wherein in a case where a fluctuation occurs between the frames of the display data displayed on the display unit, the method comprises further instructing, by the first processor, the third processor on the refresh rate of the display unit based on a position where the fluctuation occurs in a screen of the display unit.

12. The control method according to claim 11, comprising
instructing, by the first processor, the third processor on a refresh rate corresponding to video display when a fluctuation that does not change the position continues to occur based on the position where the fluctuation occurs in the screen of the display unit.

13. The control method according to claim 11 or claim 12,
wherein when the position where the fluctuation occurs in the screen of the display unit is separated from a position of a cursor displayed on the display unit, the method comprises instructing, by the first processor, the third processor on a low refresh rate as compared to when the position where the fluctuation occurs in the screen of the display unit is close to the position of the cursor displayed on the display unit.

14. The control method according to any one of claims 11 to 13,
wherein when the position where the fluctuation occurs in the screen of the display unit is a position around the screen of the display unit, the method comprises instructing, by the first processor, the third processor on a low refresh rate as compared to when the position where the fluctuation occurs in the screen of the display unit is a central position.
